(19) Europäisches Patentamt
European Patent Office
Office européen des brevets

(11) **EP 2 043 317 A2**

(12) **EUROPEAN PATENT APPLICATION**

(43) Date of publication:
**01.04.2009 Bulletin 2009/14**

(51) Int Cl.:
***H04L 27/26*** (2006.01)

(21) Application number: **08015707.6**

(22) Date of filing: **05.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.09.2007 US 860710**

(71) Applicant: **MITSUBISHI ELECTRIC CORPORATION**
**Chiyoda-ku**
**Tokyo 100-8310 (JP)**

(72) Inventors:
• **Duan, Chunjie**
 **Medfield**
 **MA 02052 (US)**
• **Teo, Koon Hoo**
 **Lexington**
 **MA 02421 (US)**

(74) Representative: **Pfenning, Meinig & Partner GbR**
**Patent- und Rechtsanwälte**
**Theresienhöhe 13**
**80339 München (DE)**

(54) **Method and apparatus for reducing peak to average power ratio of transmitted signal**

(57) A method and system reduces a peak to average power ratio of a transmitted OFDM signal. An input signal is encoded using a forward error correcting code to produce a codeword corresponding to the input signal. A peak power corresponding to the codeword is measured. The peak power is compared with a predetermined threshold, and a set of selected bits in the codeword are manipulated if the peak power is greater than the predetermined threshold to deliberately produce an erroneous codeword in which the peak power is less than the predetermined threshold, which is transmitted.

*FIG. 4*
400

**Description**

**Field of the Invention**

This invention relates to wireless communication systems, and more particularly to a method and system for reducing peak-to-average power ratio (PAPR) in orthogonal frequency division multiplexed (OFDM) signals.

**Background of the Invention**

Orthogonal frequency division multiplexing (OFDM) modulates information symbols over a number of individual subcarriers. An OFDM signal includes multiple subcarriers modulated at different equally spaced frequencies, which are orthogonal to each other. OFDM modulation is an effective modulation scheme for transmission data at high rate over multipath fading channels. As an advantage, OFDM can be used in broadband digital communication applications because of its high spectral efficiency and robustness to the multipath fading. The IEEE 802.11 and IEEE 802.16 standards specify OFDM modulation.

In OFDM, the available bandwidth in a channel is divided into N narrowband subcarrier frequencies. The data are transmitted concurrently over these N equally spaced carriers. The subcarriers are designed to have a minimum frequency separation required to maintain the orthogonality of their corresponding waveforms. OFDM uses an inverse fast Fourier transform (IFFT) to generate the time domain signal waveforms. The Wireless MAN-OFDM in the IEEE Std 802.16-2004 is based on 256 point IFFTs. The OFDMA PHY mode in the IEEE P802.16e draft/D9 includes the IFFT sizes 2048, backward compatible to IEEE Std 802.16-2004), 1024, 512 and 128. In many wireless communication standards, forward error correction (FEC) is specified to improve the system performance under noisy or fading channel conditions. The FEC encodes a sequence of symbols as a codeword.

One of the major drawbacks of OFDM is varying amplitude in the transmitted signal. The constructive summation of $N$ exponential signals can result in a peak power that is $N$ times the average power. One of the frequently used measurements for the peak power is the peak to average power ratio (PAPR):

$$PAPR = \frac{\max_{0 \leq t \leq NT} |x(t)|^2}{ave(|x(t)|^2)} = \frac{\max_{0 \leq t \leq NT} |x(t)|^2}{1/(NT) \int\limits_{t=0}^{NT} |x(t)|^2 \, dt}, \qquad (1)$$

where $x(t)$ is the OFDM transmitted signal, $T$ is the sampling period, and $N$ is the number of subcarriers for a OFDM symbol.

A transmitter power amplifier (PA) has a linear gain only in a certain power range. After the input signal amplitude is too high, the PA becomes nonlinear. This nonlinear effect distorts the orthognality between subcarriers and also produces too much out of band emission, which is prohibited by regulations. In order to prevent the transmitter amplifier from limiting (clipping) or being driven into the nonlinear region, the average signal power must be kept low enough to keep the signal relatively linear through the amplifier.

As the number of subcarriers in the OFDM signal increases, the amplitude of the OFDM signal becomes more like noise with a very large dynamic range. Therefore, the RF power amplifier (PA) in the transmitter should have a large input backoff to maintain its linearity. The backoff results in a power conversion inefficiency. For example, the maximum power efficiency of a Class B PA is 78.5%. However, this efficiency drops to 7.85% for an input signal with a PAPR of 10 dB. Hence, the DC power consumption is 1.3 Watts to achieve a power level of 100 mW. The high DC consumption can decrease battery lifetime. Thus, a method for reducing the PAPR for OFDM signals is desired.

A number of different techniques are known for PAPR reduction in OFDM signals.

**Block encoding:** A codeword which reduces the PAPR is selected for transmission. There are some code sequences, for example, Shapiro-Rudin sequences, Golay codes, M-sequences, Binary Barker, and Newman phases, that have reduced PAPR. However, block encoding needs an exhaustive search for good codes. As N increases, this becomes impossible.

**Selective mapping:** The transmitter generates a set of candidate data blocks for the same information data block. The best mapping that has the lowest PAPR is selected for transmission. For implementation, the transmitter needs some IFFT operations, and determines the corresponding PAPR for these sequences. The side information of which candidate is used has to be transmitted with the information data block to the receivers. The complexity increases as the number of candidates increases.

**Partial transmit sequences:** The information data block of $N$ symbols is partitioned into subblocks. The subcarriers in each subblock are weighted by a phase factor. The phase factors are selected such that the resulted PAPR is minimized. In general, the phase factors are limited to $W$ elements to reduce the complexity. The side information of which phase factors is used is transmitted with the information data block to the receivers. The complexity increases as $W$ increases.

**Interleaving:** A set of interleavers is used to find the sequences having the minimum PAPR. The side information about which interleaver is used must be transmitted to the receivers. This method has the same problem for all the methods that need side information because an error in the side information can result in the lost of the transmitted signal.

**Peak windowing:** In this method, the PAPR is reduced by multiplying the large peak signal with a Gaussian window. PAPR reduction is achieved at the expense of out-of-band spectral components and in-band noise.

**Companding:** This idea is similar to companding a speech signal. Because the OFDM signal is similar to speech in the sense that large peaks occur infrequently, a $\mu$-law companding technique can be used to reduce the PAPR. However, companding also causes out-of-band spectral components, and symbol error rate improvement only occurs at higher SNR. The PAPR is reduced to approximately $\sqrt{N}$.

**Amplitude clipping and filtering:** Amplitude clipping limits the peak envelope of the input signal to a predetermined value. The noise caused by the nonlinear properties of the clipping function falls both in-band (BER performance degradation) and out-of-band (spectral efficiency reduction). Filtering after the clipping can reduce the out-of-band noise. The most frequently used amplitude clipping operation is given by

$$x_n' = \begin{cases} x_n, & |x_n| < A \\ Ae^{j\phi_n}, & |x_n| \geq A \end{cases} \tag{2}$$

where $\phi_n$ is the phase of $x_n$ and A is the pre-defined clipping level. This method is referred as hard clipping (HC). The masking only removes a portion of the out-of-band radiation using hard clipping. Typically, many zeros are inserted in the transmitted signals in the *frequency* domain. This requires a very large value of the IDFT to generate the oversampled signal.

**Tone reservation and tone injection:** In one OFDM symbol, some subcarriers are reserved for PAPR reduction. The transmitted values for these subcarriers are determined by solving a convex optimization problem. The amount of PAPR reduction depends on the number of reserved subcarrier and their locations. For an IEEE 802.16 adaptive burst transmission, some subcarriers experiencing lower SNR can be used for this purpose. However, the subcarrier locations used for PAPR reduction should be changed adaptively. This leads to additional complexity. If the subcarrier locations are fixed, then bandwidth is reduced. Tone injection increases the size of a constellation such that each of the constellation points in the original constellation is mapped into several constellation points. Each transmitted symbol in the data block can be mapped into one of several equivalent constellation points. The problem with tone injection is that this technique increases power requirements.

**Summary of the Invention**

A method and system reduces a peak to average power ratio of a transmitted OFDM signal.

An input signal is encoded using a forward error correcting code to produce a codeword corresponding to the input signal. A peak power corresponding to the codeword is measured.

The peak power is compared with a predetermined threshold, and a set of selected bits in the codeword are manipulated if the peak power is greater than the predetermined threshold to deliberately produce an erroneous codeword in which the peak power is less than the predetermined threshold, which is transmitted.

**Brief Description of the Drawings**

Figure 1 is a block diagram of a transmitter system including PAPR reduction according to an embodiment of the invention;

Figure 2 is a block diagram of a receiver system including PAPR reduction according to an embodiment of the invention;

Figure 3 is a block diagram of tones used for PAPR control according to an embodiment of the invention;

Figure 4 is a block diagram of details of the transmitter system including PAPR reduction in the frequency domain according to an embodiment of the invention;

Figure 5 is a block diagram of details of the transmitter system including PAPR reduction in the time domain according to an embodiment of the invention; and

Figure 6 is a block diagram of details of the receiver system including PAPR reduction according to an embodiment of the invention.

## Detailed Description of the Preferred Embodiments

### PAPR Reducing Transmitter

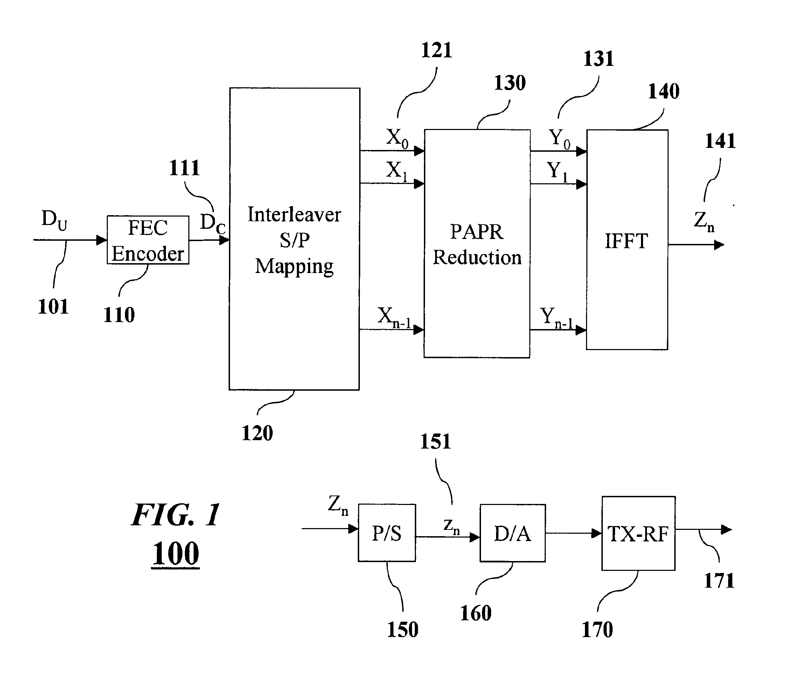

Figure 1 shows the basic structure of a transmitter 100 according to an embodiment of the invention for reducing peak to average power ratio (PAPR) in an orthogonal frequency division multiplexed (OFDM) signal. A serial input signal $(D_U)$ 101 is FEC encoded 110 to produce a codeword $D_C$ 111. The codeword $D_C$ is converted 120 to a parallel signals 121, interleaved (optional) and mapped to QPSK, 16QAM, 64QAM or other modulation symbols $(x_0, x_1,... x_{N-1})$ 121 specified by the system.

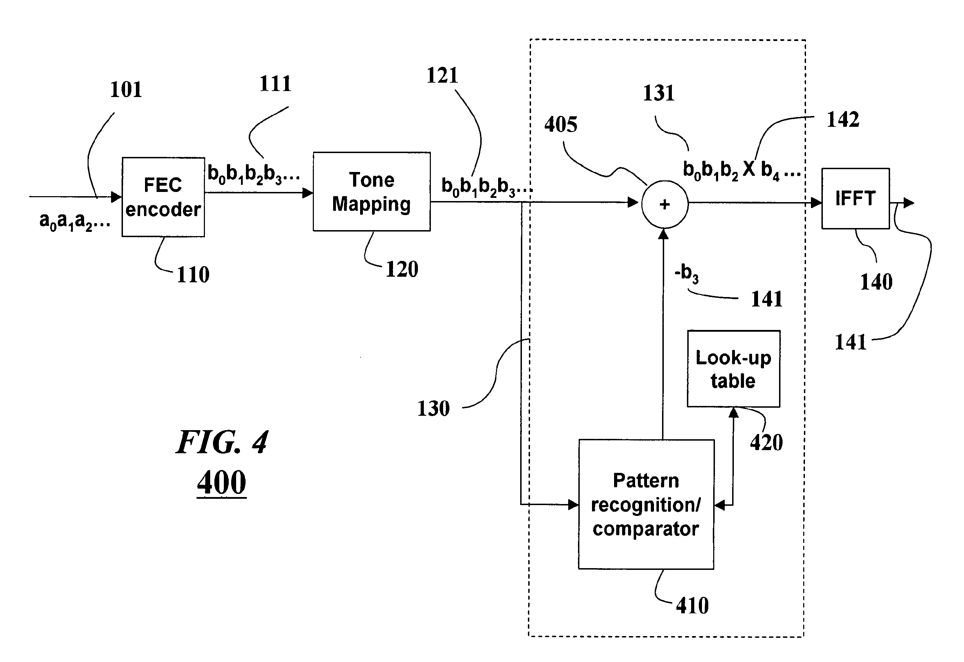

The symbols 121 are processed 130 for PAPR reduction as described below in greater detail, see Figure 4. The output data $(y_0, y_1,... y_{N-1})$ 131 are transformed into time domain signals 141 via an inverse fast Fourier transform (IFFT) 140, which generates a complex-valued baseband signal

$$ x_n = \frac{1}{\sqrt{N}} \sum_{k=0}^{N-1} \left( a_k + jb_k \right) e^{\frac{j2\pi kn}{N}}, \quad 0 \leq n \leq N - 1, \quad (3) $$

where N is the number of subcarriers in one OFDM symbol, $a_k$ and $b_k$ are the real and imaginary components of the complex-valued modulated symbols.

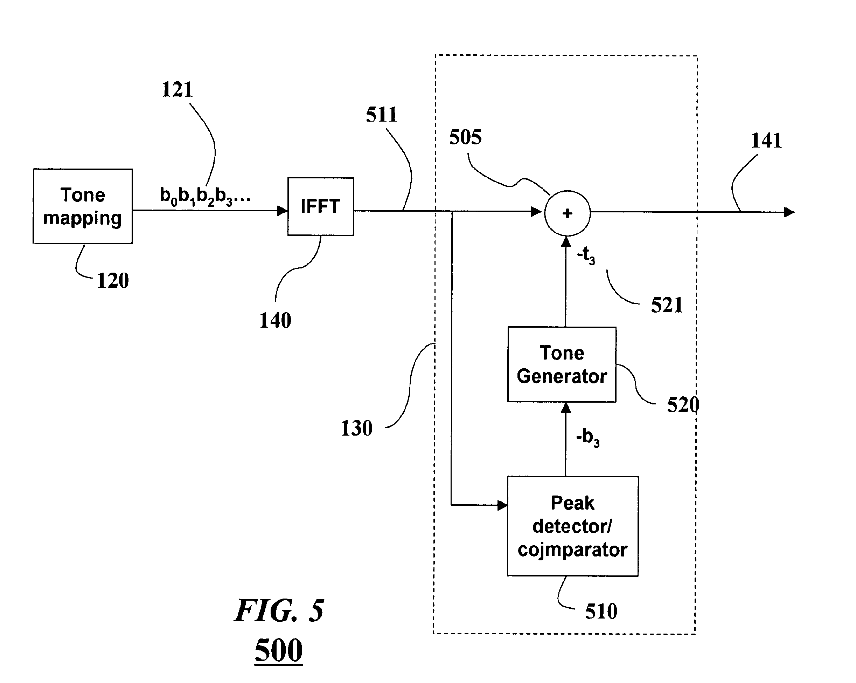

Instead of performing the PAPR reduction in the frequency domain, it can also be performed in the time domain *after* the IFFT 140, see Figure 5.

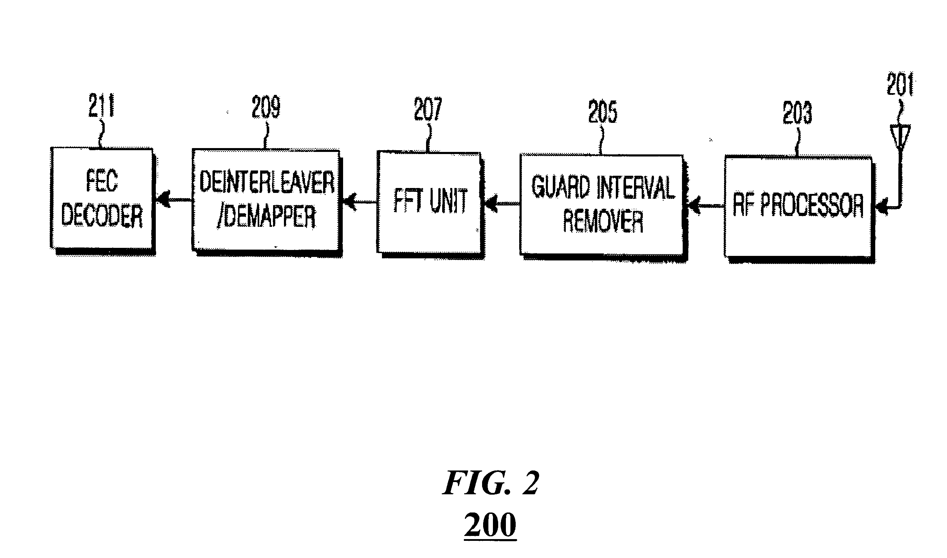

After parallel to serial (P/S) conversion 150, the serialized output 151 is fed to a digital to analog converter (D/A) 160 for generating an analog baseband signal. The transmitter radio frequency circuit (TX-RF) 170 modulates converts and amplifies the baseband signal to produce a radio frequency (RF) transmitted signal 171, which is transmitted to a receiver, see Figure 2.

### PAPR Reduction

The PAPR block 130 deliberately manipulates a *set of selected bits* of the encoded signal 121 to reduce the PAPR. The set can include one or more bits. The manipulation can change the phase or amplitude of the signal that is transmitted for the bit. For example, the phase can be changed by ± 90 or 180 degrees, or some other angle. The amplitude can also be changed. For example, the amplitude can be set to zero, in which case the bit is effectively "nulled." The set of manipulated bits will cause *deliberate* errors in the received signal. The receiver corrects these errors via its FEC decoder as described below.

### PAPR Reducing Receiver

Figure 2 shows a receiver 200 according to the embodiments of the invention. The receiver includes an antenna 201, an RF processor 203, a guard interval remover 205, a Fast Fourier Transform (FFT) unit 207, a deinterleaver/ demapper 209, and an FEC decoder 211.

The received signal includes noise added to the signal when the signal passed through the multi-path channel, as well as the deliberate PAPR induced errors. The signal received through the Rx antenna 201 is input to the RF processor 203, which down-converts the signal into the baseband and then outputs the down-converted signal to the guard interval remover 205.

The guard interval remover 205 receives the signal from the RF processor 203, eliminates the guard interval from the received signal, and then outputs the signal to the FFT 207. The FFT 207 performs FFT on the signal output from the guard interval remover 205 and then outputs the FFT-ed signal to the deinterleaver/demapper 209.

The deinterleaver/demapper 209 reverses the process done in interleaver, mapping block 120 of the transmitter 100 by deinterleaving and demodulating the signal from the FFT 207, and then outputs it to the FEC decoder 211. The FEC decoder 211 applies error correction to the received signal and corrects the deliberate errors, and outputs the data bits transmitted from the transmitter.

## Tone Sequence

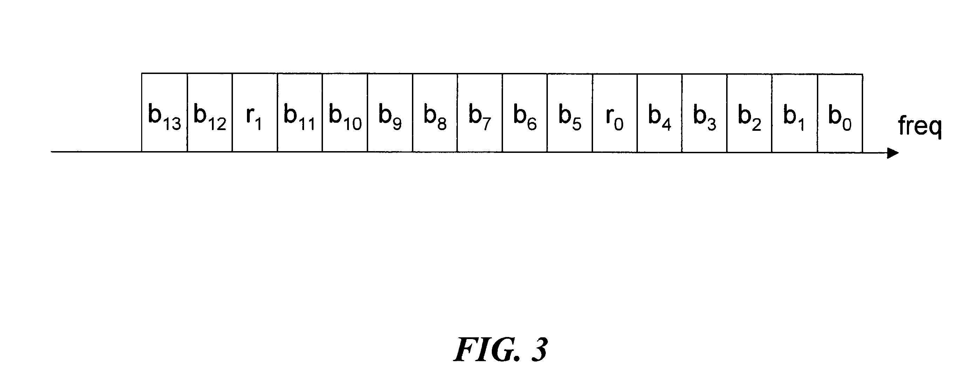

Figure 3 shows a sequence of tone that can be used for PAPR control. For example, there are a total of sixteen sub-carriers (tones) available in the OFDM symbol. There are fourteen data tones ($b_0$, $b_1$, ..., $b_{13}$), and perhaps, two reserved tones ($r_0$, $r_1$) at fixed frequencies. The reserved tone can be used for PAPR. There are two disadvantages in such an approach. First, the spectral efficiency is fixed at 14/16 or 87.5%, regardless if PAPR reduction is performed or not. Second, only the reserved tones can be used to reduce the PAPR, therefore this technique has limited flexibility.

Many wireless communication systems, e.g., IEEE 802.11 and IEEE 802.16, use forward error correction (FEC) 110. The embodiments of the invention identify or predict the location of the *power peaks*, and manipulate the set of selected bits in the transmitted sequence to reduce the PAPR.

Inverting or nulling bits cause errors in the transmitted data and the received data. If the data are coded by FEC, the errors are corrected by the FEC decoder 211 in the receiver 200.

The transmitter ensures that the errors injected are within the error-correction capability of the receiver. Therefore, transmitter 100 has prior knowledge of capabilities of the FEC decoder 211, and the operation of the PAPR is dependent on the FEC code.

The embodiments of the invention not only reduce PAPR, but also improve spectrum efficiency, compared with the PAPR reduction that uses the reserved bits. As long as the PAPR is acceptable, no bits are manipulated, and little or no additional overhead is incurred.

## Frequency Selective Reduction

It is known that channels used by mobile devices can be frequency selective and subject to fast fading. Fading is due to multipath propagation and is sometimes called multipath induced fading. Each copy of the received signal experiences differences in attenuation, delay and phase shift while propagated through the channel. This can result in constructive or destructive interference, amplifying or attenuating of the received signal and a severe drop in the channel SNR.

If the receiver measures the channel state information (CSI), and feeds the CSI back to the transmitter, then the transmitter can selectively manipulate a selected set of tones (bits), for the purpose of PAPR reduction, that have a relative low SNR.

## Pattern Recognition

Figure 4 shows one embodiment for PAPR reduction. The FEC encoding 110 is applied to the input signal 101 to produce the codeword 111. The data are mapped 120 to tones 121. In the PAPR reduction unit 130, a pattern recognition block 410 can detect the patterns that produce peaks that exceed a predefmed threshold.

If such a predetermined pattern is detected, then an error signal (one or multiple bits (-$b_3$) 421 is produced. The error signal can be obtained from a look-up table 420. The error signal indicates which bits are to be manipulated 405, and how, e.g., phase, amplitude or both. In the signal 131, the bit **x** 142 denotes the manipulated bit. The manipulation *deliberately* produces an *erroneous* codeword in which the peak power is less than the predetermined threshold. The signal 131 produces a time-domain signal 141 with a reduced PAPR, after the IFFT 140.

## Time Domain PAPR Reduction

As shown in Figure 5, the error tone injection PAPR reduction can also be implemented in the time-domain. The tone mapping 120 is performed to produce the signal 121. The IFFT 140 produces the time domain signal 511. The signal 511 may have peaks that exceed the threshold. A peak detector 510 detects the locations of the peaks that exceed the threshold. Based on this information, the tone generator 520 generates one or more error tones (-$t_3$) 521. The error tones are added 505 to the original time-domain signal 511 to produce the reduced PAPR time domain signal 141.

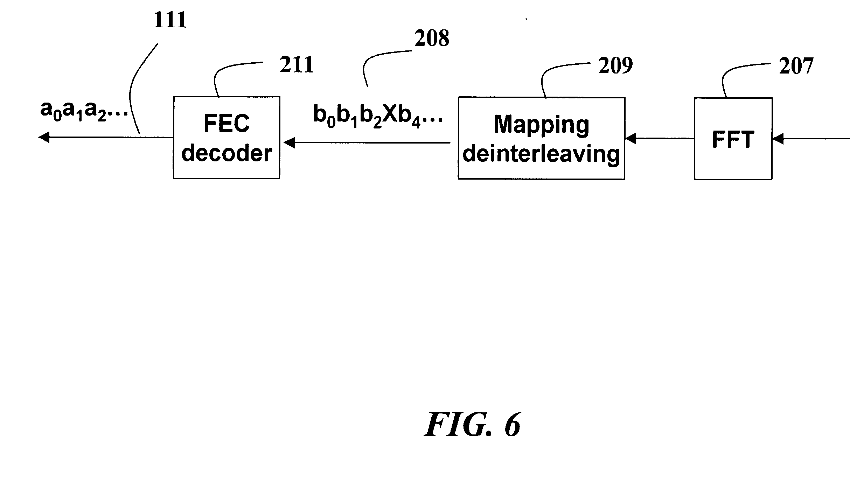

Figure 6 shows the details of the comparable receiver structure. After the FFT 207, the received signal is tone mapped 209. The signal 208 may include deliberate errors (**x**), which are corrected by the FEC decoder 211 to reproduce the original input signal 111 at the transmitter 100.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

1. A method for reducing a peak to average power ratio of a transmitted signal comprising the steps of:

   encoding an input signal using a forward error correcting code to produce a codeword corresponding to the input signal;
   measuring a peak power corresponding to the codeword;
   comparing the peak power with a predetermined threshold;
   manipulating a set of selected bits in the codeword if the peak power is greater than the predetermined threshold to deliberately produce an erroneous codeword in which the peak power is less than the predetermined threshold; and
   transmitting the erroneous codeword as a transmitted signal.

2. The method of claim 1, in which the steps of measuring, comparing and manipulating is performed in the frequency domain.

3. The method of claim 1, in which the steps of measuring, comparing and manipulating is performed in the time domain, and the selected bits correspond to tones.

4. The method of claim 1, in which the step of manipulating changes a phase of the transmitted signal corresponding to the set of selected bits.

5. The method of claim 1, in which the step of manipulating changes an amplitude of the transmitted signal corresponding to the set of selected bits.

6. The method of claim 1, in which the step of manipulating changes a phase and an amplitude of the transmitted signal corresponding to the set of selected bits.

7. The method of claim 5, in which the amplitude is zero to null the set of selected bits.

8. The method of claim 1, further comprising the steps of:

   receiving the transmitted signal as a received signal; and
   applying error correction to the received signal.

9. The method of claim 1, further comprising the steps of:

   measuring a channel state information; and
   determining the set of selected bits according to the channel state information.

10. The method of claim 9, in which the set of selected bits have a relatively low signal to noise ratio.

11. The method of claim 1, further comprising the step of:

    determining the set of selected bits by pattern recognition and a look-up table.

12. The method of claim 1, in which the transmitted signal is orthogonal frequency division multiplexed.

13. An apparatus for reducing a peak to average power ratio of a transmitted signal comprising:

    an encoder configured to encode an input signal using a forward error correcting encoder to produce a codeword corresponding to the input signal;

means for measuring a peak power corresponding to the codeword;
a comparator configured to compare the peak power with a predetermined threshold;
means for manipulating a set of selected bits in the codeword if the peak power is greater than the predetermined threshold to deliberately produce an erroneous codeword in which the peak power is less than the predetermined threshold; and
means for transmitting the erroneous codeword as a transmitted signal.

**FIG. 1**
**100**

EP 2 043 317 A2

**FIG. 2**

**200**

EP 2 043 317 A2

*FIG. 3*

EP 2 043 317 A2

**FIG. 4**
**400**

EP 2 043 317 A2

**FIG. 5**
**500**

EP 2 043 317 A2

*FIG. 6*